# EUROPEAN PATENT APPLICATION

(11) **EP 3 416 251 A1**
(43) Date of publication of application: **19.12.2018**
(21) Application number: 17175476.5
(22) Date of filing: 12.06.2017
(51) Int. Cl.: H01S 3/04, H01S 3/06, H01S 3/08

(54) **RADIATION FIELD AMPLIFYING SYSTEM**

(71) Applicant: Universität Stuttgart, 70174 Stuttgart (DE)
(72) Inventor: Wolter, Jan-Hinnerk, 70176 Stuttgart (DE); Piehler, Stefan, 70180 Stuttgart (DE)
(74) Representative: Hoeger, Stellrecht & Partner Patentanwälte mbB

(57) **Abstract**

A radiation field amplifying system (10) for amplifying a radiation field (14) comprising a laser active body (16), a cooling system (18) for cooling said laser active body and an optical system (12) which guides said radiation field along an optical path (42) wherein said optical path comprises several branches (44, 46, 48), comprises at least two branches of said optical path pass through said laser active body, said optical system comprises at least one reflective layer (52) which links said at least two branches and a heat spreading element (112) of said cooling system is arranged in thermal contact between said laser active body (16) and said reflective layer (52).

## Description

The invention relates to a radiation field amplifying system for amplifying a radiation field comprising a laser active body, a cooling system for cooling the laser active body and an optical system for guiding said radiation field along an optical path.

For example said radiation field amplifying system comprises a resonator or is a resonator.

In another embodiment said amplifying system comprises or is a radiation field amplifier, in particular a laser amplifier.

Radiation field amplifying systems showing the afore-mentioned features are known from the prior art.

The output power of such radiation field amplifier systems is limited by the thermal and mechanical properties of said laser active body.

One option to adjust the output power is to vary a volume of a pumped part of said laser active body in which pumping power is introduced.

In particular, it is crucial for an efficient operation of said radiation field amplifying system to cool said laser active body, in particular its pumped part.

It is the object of the present invention to improve an operation of such radiation field amplifying systems, in particular by increasing a cooling efficiency of said cooling system for cooling said laser active body, advantageously to increase the efficiency of said radiation field amplifying system.

This object is solved by a radiation field amplifying system as defined above in which said optical path comprises several branches, in which at least two branches of said optical path pass through said laser active body, in which said optical system comprises at least one reflective layer which links said at least two branches and in which a heat spreading element of said cooling system is arranged in thermal contact between said laser active body and said reflective layer.

An advantage of the present invention has to be seen in the fact that between said laser active body and said reflective layer said heat spreading element is arranged and thereby a thermal contact of said laser active body to said cooling system is increased.

In particular the cooling efficiency of said cooling system is increased, because typically the specific thermal resistance of said reflective layer is larger than the specific thermal resistance of said heat spreading element and therefore the heat generated in said pumped part is more efficiently and more quickly removed from said pumped part.

Accordingly, an increase of an averaged temperature within said pumped part due to the introduced pumping power is smaller compared with an arrangement in which said reflective layer is arranged directly at said laser active body.

Here and in the following the specific thermal resistance is defined as the thermal resistance through a unit area.

In particular, the specific thermal resistance is measured with respect to a unit thickness.

Furthermore, due to the increased cooling efficiency the efficiency of said radiation field amplifying system is advantageously increased, for example an upper limit for said output power is increased.

For example, more pumping power compared with the prior art can be introduced into said pumped part while keeping an averaged temperature within said pumped part at a typical value.

For example, said averaged temperature is larger than 200 K, preferably larger than 250 K, advantageously larger than 300 K, in particular larger than 340 K.

Preferably, said averaged temperature is lower than 450 K, in particular lower than 400 K.

The power of said introduced pumping power is in particular larger than 10 W.

Depending on the design of said radiation field amplifying system said power of said pumping power can be of several hundred Watt or even of several thousand Watt.

Said heat spreading element is in thermal contact with said laser active body and to said thermal contact so far no further details have been given.

In particular, said laser active body and said heat spreading element are in thermal contact through a heat entry area.

In particular, said heat entry area is the contact area between said heat spreading element and said laser active body.

Through said heat entry area in particular heat flows from said laser active body into said heat spreading element.

Advantageously, a specific thermal resistance from said laser active body to said heat spreading element, for example through said heat entry area, is smaller than a specific thermal resistance through said reflective layer.

Therefore heat can flow more easily away from said laser active body, for example, in comparison with a situation in which said reflective layer would be directly arranged at said laser active body, and advantageously the cooling efficiency of said cooling system is increased.

For example, the specific thermal resistance from said laser active body to said heat spreading element divided by the unit area is smaller than 10 mm² K/W, in particular smaller than 5 mm² K/W.

In particular, said laser active body and said heat spreading element are arranged adjacently to each other.

In principle, said laser active body and said heat spreading element could be in direct contact, in particular they touch each other directly.

Preferably, said laser active body and said heat spreading element are in indirect contact with each other.

An advantageous embodiment provides, that said laser active body comprises one anti-reflection layer or several, in particular two, anti-reflection layers.

Advantageously said one anti-reflection layer or each of said several anti-reflection layers reflect less than 1 %, preferably less than 0,1 %, of the incident radiation field which is amplified by said radiation field amplifying system.

In particular, an anti-reflection layer is arranged on a side of said laser active body which faces towards said heat spreading element.

Preferably, an anti-reflection layer extends between said laser active body and said heat spreading element and is preferably in contact, advantageously in direct contact, with said laser active body and said heat spreading element.

Advantageously, a specific thermal resistance through at least one, preferably through each, of said anti-reflection layers is smaller than the specific thermal resistance through said reflective layer.

For example, said specific thermal resistance through an anti-reflection layer divided by the unit area is smaller than 5 mm² K/W, preferably smaller than 1 mm² K/W.

For example, said heat entry area extends within said anti-reflection layer, which is arranged between said laser active body and said heat spreading element.

In particular, said radiation field amplifying system exhibits an optical axis.

In particular, a direction of propagation of said radiation field along said at least two branches is essentially parallel to an axial direction with respect to said optical axis.

Here and hereafter the notion "essentially parallel" in particular comprises the situation that the corresponding directions are parallel to each other or an angle between these directions is smaller than 10°, preferably smaller than 5°, in particular smaller than 1°.

Preferably, a first branch of said at least two branches is incident on said reflective layer and a second branch of said at least two branches is the reflected branch of said first branch.

In particular, said radiation field runs along said at least two branches essentially along the same way but with opposite direction of propagation.

For example, said heat entry area runs at least approximately perpendicular to said axial direction with respect to said optical axis.

For example, said heat entry area runs at least approximately perpendicular to the propagation direction of said radiation field along one of said at least two branches.

Here and hereafter the notion "along one of said at least two branches" comprises in particular embodiments in which the direction along the first of said at least two branches is taken as well as embodiments in which the direction along the second of said at least two branches is taken. Preferably the direction along said first, in particular incident, branch is taken.

Here and hereafter the notion "at least approximately" in particular comprises the situation that the given value is exactly realized or the realized value deviates from the given value by at most 20 %, preferably by at most 10 %, in particular by at most 5 %, advantageously by at most 1 %, of the given value.

In particular said at least two branches of said optical path pass through said pumped part.

For example, a pumping radiation field penetrates said pumped part.

In principle, said pumping radiation field could penetrate said pumped part only once. That is, only one branch of said pumping radiation field passes through said pumped part.

Advantageously, said pumping radiation field penetrates said pumped part several times. In particular, several branches of said pumping radiation field pass through said pumped part.

Accordingly, preferably said pumping radiation field is provided in a multi pass optical arrangement and therefore the efficiency of said pumping is increased due to the multiple penetration of said pumped part by said pumping radiation field.

In principle, said pumping radiation field could be provided in radial direction with respect to said optical axis.

However, advantageously said pumping radiation field is provided oblique to said optical axis or at least approximately in axial direction with respect to said optical axis. Thereby preferably said pumping radiation field can be concentrated to the part of said laser active body which is penetrated by said radiation field which should be amplified.

In particular, said branches of said pumping radiation field which penetrate said pumping part enclose with said optical axis an angle which is smaller than 60°, preferably smaller than 50°, preferably smaller than 40°. For example, different branches of said pumping radiation field enclose with said optical axis different angles with each of said angles being smaller than said aforementioned limiting angle.

In particular, said heat entry area comprises a central heat entry area.

Preferably, through said central heat entry area most of the heat of a heat flow from said pumped part to said heat spreading element flows, for example at least 50 % of said heat, in particular at least 80 % of said heat, preferably at least 90 % of said heat, advantageously at least 95 % of said heat.

In particular, said central heat entry area is a projection of said pumped part onto said heat entry area.

For example said projection is taken in direction of the propagation direction of said radiation field along one of said at least two branches.

In another embodiment said projection is taken in direction of the thermal heat flow from said pumped part to said heat spreading element.

Another embodiment provides that said projection is taken in axial direction with respect to said optical axis.

So far no further details have been given with respect to said heat spreading element.

In particular, said heat spreading element is disc-like shaped with its extension in radial direction with respect to an axis being larger, preferably at least five times larger, than its extension in axial direction with respect to said axis.

Preferably said axis of said heat spreading element is essentially parallel arranged to said optical axis, advantageously both axes coincide.

In particular, the direction of propagation of said radiation field through said heat spreading element is essentially parallel to said axial direction with respect to said axis of said heat spreading element.

Preferably, said radial extension of said heat spreading element is larger than 5 mm, in particular larger than 10 mm.

For example said radial extension of said heat spreading element is smaller than 40 mm, in particular smaller than 20 mm.

A thickness of said heat spreading element is for example measured along one of said at least two branches.

In some embodiments the thickness of said heat spreading element is measured in axial direction with respect to said axis of said heat spreading element.

For example, the thickness of said heat spreading element is larger than 100 µm.

In particular said thickness of said heat spreading element is smaller than 5 mm, preferably smaller than 2 mm.

In a preferred embodiment said thickness of said heat spreading element is at least approximately 500 µm.

Said heat spreading element in particular possesses a good thermal conductivity, for example is made of one or several materials with a good thermal conductivity.

Furthermore said heat spreading element is advantageously essentially transparent for said radiation field. In particular said heat spreading element is made of one or several materials which are essentially transparent for said radiation field.

The notion "essentially transparent" in particular comprises the situation that at least 99 % of said radiation field are transmitted.

In a preferred embodiment said heat spreading element comprises diamond, in particular monocrystalline diamond.

No further details with respect to said laser active body have been given so far.

In some embodiments said radiation field amplifying system comprises several laser active bodies. Preferably, one of or a couple of, in particular each of, said several laser active bodies comprise(s) one or several of the following features.

Advantageously, said radiation field amplifying system comprises exactly one laser active body, which preferably comprises one or several of the following features.

Having only one laser active body provides the advantage that the setup of said radiation field amplifying system is simpler and a multi-pass optics for said pumping radiation field can be implemented in an efficient way.

In particular said laser active body is essentially disc-liked shaped with an extension of said laser active body in a radial direction with respect to an axis being larger, in particular at least five times larger, than its extension in axial direction with respect to said axis.

Preferably said axis of said laser active body is essentially parallel to said optical axis and/or said axis of said heat spreading element, advantageously said axes coincide.

In particular, said radiation field propagates essentially parallel to said axial direction with respect to said axis of said laser active body through said laseractive body.

Said radial extension of said laser active body is for example at least 5 mm.

In particular said radial extension of said laser active body is smaller than 30 mm, for example smaller than 20 mm.

A thickness of said laser active body is measured for example along one of said at least two branches.

In some embodiments, said thickness of said laser active body is measured in axial direction with respect to said axis of said laser active body.

For example said thickness of said laser active body is at least 40 µm, preferably at least 80 µm.

Said thickness of said laser active body is in particular smaller than 500 µm, for example smaller than 300 µm.

In principle, the thicknesses of said heat spreading element and of said laser active body could at least approximately be the same.

In a preferred embodiment, the thickness of said heat spreading element is larger than the thickness of said laser active body.

In particular, the thickness of said heat spreading element is at least two times, preferably at least three times, for example at least five times, advantageously at least eight times, larger than the thickness of said laser active body.

For example said radial extension of said heat spreading element is at least approximately the same as said radial extension of said laser active body.

In another advantageous embodiment said radial extension of said heat spreading element is larger than said radial extension of said laser active body.

Preferably, said radial extension of said heat spreading element is at least two times, preferably at least three times, in particular at least four times, advantageously at least six times, for example at least ten times, larger than said radial extension of said laser active body, in particular than the radial extension of said pumped part of said laser active body.

Within the aforementioned embodiments advantageously an efficient spreading of the heat and accordingly a "quick" heat transfer away from said pumped part is achived.

In particular, said laser active body comprises a laser active material.

In an advantageous embodiment said laser active body comprises yttrium aluminium garnet, Y₃Al₅O₁₂, in particular ytterbium doped and/or neodymium doped and/or thulium doped yttrium aluminium garnet.

For example said laser active body comprises titanium.

In particular said laser active body comprises aluminium oxide Al₂O₃.

An advantageous embodiment provides that said laser active body comprises sapphire, in particular titanium doped sapphire.

Preferably, said laser active body comprises an ytterbium doped material and/or a neodymium doped material.

In a preferred embodiment said laser active body comprises Lutetium (III) Oxide, for example ytterbium doped Lutetium (III) Oxide.

With respect to the heat flow no further details have been given so far.

Preferably the heat within said laser active body flows essentially in axial direction with respect to said axis of said laser active body, advantageously in axial direction with respect to said optical axis.

Therefore, there is advantageously no or an essentially negligible small thermal gradient in radial direction with respect to said axis and as a consequence distortions to said radiation field, for example distortions to its wave front, resulting from such a radial thermal gradient are avoided or at least reduced compared to situations in which a thermal gradient in radial direction is present.

Such distortions to said radiation field, for example distortions to its wave front, are linked with temperature gradients that occur within the area through which said radiation field propagates and where the said temperature gradient is transversal to the direction of propagation of said radiation field.

Advantageously, the heat flow from said laser active body to said heat spreading element, for example through said heat entry area, runs essentially parallel to the propagation direction of said radiation field.

Accordingly, distortions to said radiation field, for example distortions to its wave front, which would occur if said heat flow would propagate transverse to said direction of propagation of said radiation field with a resulting thermal gradient, are reduced.

In particular in said heat spreading element the heat flow runs essentially at least approximately in radial direction with respect to said axis of said heat spreading element and/or said optical axis. Advantageously, thereby the heat spreads in a larger volume and is therefore quicker removed from said laser active body and therefore the cooling efficiency is increased.

For example, the heat flow within said heat spreading element runs essentially transverse, in particular at least approximately perpendicular, to the propagation direction of said radiation field along one of said two branches.

In particular the thermal conductivity of said heat spreading element is such high, that the heat is transferred efficiently in radial direction within said heat spreading element and therefore at most a small radial thermal gradient establishes, which essentially does not adversely affect said radiation field.

Therefore, advantageously the heat flows efficiently away from the volume which is penetrated by said radiation field and therefore distortions to said radiation field due to thermal gradients are reduced.

No further details have been given so far to additional parts of said cooling system.

In particular, said heat spreading element is in thermal contact with one or several additional parts of said cooling system.

Preferably, heat, in particular heat stemming from said pumped part, flows through a heat escape area from said heat spreading element to said one or said several additional parts of said cooling system and therefore advantageously the heat is further removed to increase the cooling efficiency.

A preferred embodiment provides that a specific thermal resistance through said heat entry area and in particular through said central heat entry area is smaller, for example at least two times smaller, preferably at least five times smaller, in particular at least ten times smaller, than a specific thermal resistance through said heat escape area. Thereby it is provided that the heat is efficiently brought away from said laser active body.

An advantageous embodiment provides that said heat escape area is larger, for example at least two times larger, preferably at least five times larger, in particular at least eight times larger, advantageously at least fifteen times larger, than said central heat entry area, in particular than said heat entry area.

In particular, said heat escape area is such larger than said central heat entry area, preferably than said heat entry area, such that the thermal resistance through said heat escape area is smaller than the thermal resistance through said central heat entry area, preferably smaller than the thermal resistance through said heat entry area. The thermal resistance through one of said areas is the corresponding specific thermal resistance times the measure of the corresponding area in units of said unit area.

Thereby an efficient flow of the heat through said heat spreading element is achieved and advantageously a heat accumulation within said heat spreading element is avoided.

Thereby, the area for the heat to escape from said heat spreading element is larger and spreading of the heat is increased.

For example, said heat escape area runs at least partly, preferably fully, adjacently to said reflective layer.

Another embodiment provides, that said heat escape area runs at least partly, preferably fully, within said reflective layer.

In particular, said heat escape area is the contact area between said heat spreading area and said reflective layer.

In particular, said radiation field hits said reflective layer within a reflecting area and said radiation field is reflected on said reflecting area.

Advantageously, said heat escape area is larger, for example at least two times larger, preferably at least five times larger, in particular at least eight times larger, advantageously at least fifteen times larger, than said reflecting area.

In a preferred embodiment said heat escape area and said heat entry area run essentially parallel to each other.

An advantageous embodiment provides that said laser active body is arranged adjacently to a first side of said heat spreading element and said reflective layer is arranged adjacently to a second side of said heat spreading element.

In particular, said reflective layer is in direct contact with said second side.

Preferably, said first side and said second side are arranged opposite to each other.

In particular, said heat entry area lies essentially within said first side.

Advantageously, said heat escape area lies within said second side.

An advantageous embodiment provides that said heat entry area and said heat escape area lie essentially at opposing sides of said heat spreading element.

With respect to said reflective layer no further details have been given so far.

In particular, said reflective layer reflects at least 99 %, preferably at least 99,9 % of said incident radiation field which is amplified by said radiation field amplifying system.

In general said reflective layer could be a single layer.

An advantageous embodiment however provides that said reflective layer comprises several sublayers.

In particular, said sublayers possess alternately a high and a low refractive index.

For example, sublayers with a low refractive index comprise silicon dioxide.

Sublayers with a high refractive index for example comprise tantalum pentoxide (Ta₂O₅) and/or titan dioxide (TiO₂).

For example said low refractive index is smaller than 2.

In particular, said high refractive index is larger than 2.

Advantageously, said anti-reflective layers comprise also several sublayers, which preferably possess alternately a high and a low refractive index.

For example said sublayers of said anti-reflection layers comprise one or more materials from which said sublayers of said reflective layer are made.

In particular a thickness of each of said anti-reflection layers is smaller, in particular much smaller, for example at least five times smaller, advantageously at least ten times smaller, than a thickness of said reflective layer.

In particular said thicknesses of said anti-reflection layers and said reflective layer are measured in direction of propagation of said radiation field through said layers.

An advantageous embodiment provides, that said cooling system comprises a cooling circuit with a cooling medium.

Said cooling medium is in particular a fluid cooling medium, for example water.

Said cooling circuit in particular comprises a channel system for said cooling medium.

Said cooling circuit, in particular its channel system, is arranged at a side of said reflective layer which is opposite to a side at which said laser active body and said heat spreading element are arranged. That is, in particular said reflective layer is arranged in between said heat spreading element and said cooling circuit, in particular its channel system.

Accordingly, said heat steaming from said pumped part flows through said heat spreading element through said reflective layer towards said cooling circuit.

With said cooling circuit, in particular its channel system, being arranged at the opposite side of said reflective layer with respect to said laser active body provides the advantage that the side at which said laser active body and said heat spreading element are arranged is free of the additional arrangement of said cooling circuit. Therefore the space at this said side is free, for example to arrange said pumping radiation field with said multi pass optics without being disturbed by said cooling circuit.

In particular, said cooling circuit comprises a transfer channel.

Preferably, heat is transferred, in particular through a transfer area, from an element of said cooling system which is arranged adjacently to said transfer channel towards the cooling medium flowing through said transfer channel.

In particular, said transfer area is at least approximately as large as said heat escape area.

In an advantageous embodiment, said transfer area is larger than said heat escape area.

Preferably, said transfer area is larger, for example at least two times larger, in particular at least five times larger, than said heat entry area, in particular than said central heat entry area.

In a preferred embodiment said transfer channel extends adjacently to said reflective layer.

Therefore an efficient heat transfer from said reflective layer towards said cooling circuit is provided.

Advantageously, said reflective layer is at a side facing towards said transfer channel covered by a protective coating. Thereby preferably said protective coating protects said reflective layer from harmful impacts by said cooling medium.

For example said protective coating comprises silicon, in particular silicon dioxide.

In a preferred embodiment, said protective coating comprises metal.

In an advantageous embodiment said cooling system comprises one cooling element or several cooling elements, which preferably comprise(s) one or several of the following features.

In particular said cooling element is arranged adjacently to said reflective layer, in particular on a side opposite to said heat spreading element.

Advantageously, said reflective layer extends between said heat spreading element and said cooling element and is in particular in direct contact with both elements.

Advantageously, said cooling element provides additional mechanical stability to said reflective layer.

For example said cooling element in addition enhances the heat transfer.

Preferably said cooling element possesses a high thermal conductivity, in particular its thermal conductivity is larger than the thermal conductivity of said laser active body.

For example said cooling element comprises diamond.

In another preferred embodiment said cooling element comprises metal.

In particular, said cooling element has an extension in radial direction with respect to said optical axis which is at least as large as said radial extension of said heat spreading element.

In principle, a thickness of said cooling element, which is measured in axial direction with respect to said optical axis, could be smaller than the thickness of said heat spreading element.

A preferred embodiment however provides, that said thickness of said cooling element in axial direction with respect to said optical axis is at least approximately as large as the thickness of said heat spreading element.

Advantageously, said thickness of said cooling element in axial direction with respect to said optical axis is larger than the thickness of said heat spreading element.

Preferably, the radial extension of said cooling element with respect to said optical axis is larger, for example at least two times larger, preferably at least five times larger, than the radial extension of said laser active body.

In particular, the thickness of said cooling element in axial direction with respect to said optical axis is larger, for example at least two times larger, preferably at least five times larger, than the thickness of said laser active body.

In particular, in some preferred embodiments said transfer channel extends adjacently to said cooling element.

For example, said cooling element forms partly a wall of said transfer channel.

With respect to a mounting of the elements and/or parts of said radiation field amplifying system no further details have been given so far.

For example several elements lie against each other.

A preferred embodiment provides that said heat spreading element and said laser active body, in particular their anti-reflection layers, are bonded.

In a preferred embodiment, said heat spreading element and said laser active body are physically bonded, for example optically bonded.

In another advantageous embodiment, said heat spreading element and said laser active body are chemically bonded.

Details regarding bonding of elements are for example disclosed by Lord Rayleigh, "A Study Of Glass Surfaces And Optical Contact", Proceedings of the Royal Society of London, Series A, 156, 326 (1936) and by D. Dawson, History of Tribology, Longman, London (1979), and by D. Shaddock and A. Abromovici, NASA Tech briefs, March 2004, "Solution - Assisted optical Contacting: Components in optical contact can be adjusted for about a minute" and by C. Myatt, N. Traggis, K. Li Dessau, "Optical fabrication: Optical contacting grows more robust", laserfocusworld.com, 01/01/2006. Regarding details of optical and chemical bonding it is fully referred to the afore-mentioned documents.

In some embodiments said laser active body and said heat spreading element are connected by soldering.

Within other advantageous embodiments said laser active body and said heat spreading element are connected by welding.

In some preferred embodiments said heat spreading element and said cooling element are connected by soldering and/or welding.

A preferred embodiment provides, that said laser active body and said heat spreading element and for example additionally said cooling element, are mechanically clamped together. Thereby advantageously the mechanically stability of the arrangement is increased.

For example, a holding body is arranged adjacent to said laser active body, in particular at a side opposite to the side at which said heat spreading element is arranged.

In particular said holding element is pressed against said laser active body, preferably in direction towards said heat spreading element.

Advantageously, by this pressing of said holding element against said laser active body the mechanical stability of the arrangement is increased.

For example by arranging said holding element adjacently to said laser active body an additional cooling effect is achieved.

In particular, said optical path passes through said holding element.

Preferably said holding element is full-faced attached in direct or indirect contact with said laser active body.

Preferably in between said holding element and said laser active body an anti-reflection layer is provided, such that advantageously partial reflections of to said radiation field are reduced.

Preferably said holding body comprises glass, for example fused silica.

An advantageous embodiment provides that said holding element comprises diamond, in particular monocrystalline diamond.

In a preferred embodiment said holding element comprises sapphire.

In general, a surface of said holding body which is facing towards said laser active body could be shaped in various ways.

Preferably, said surface of said holding body is essentially planar.

In another advantageous embodiment said surface of said holding body is convex shaped.

Accordingly, the preceding specification of solutions according to the present invention comprises in particular combinations of features according to the following consecutively numbered embodiments:
1. Radiation field amplifying system for amplifying a radiation field comprising a laser active body, a cooling system for cooling the laser active body and an optical system which guides said radiation field along an optical path wherein said optical path comprises several branches, wherein at least two branches of said optical path pass through said laser active body, wherein said optical system comprises at least one reflective layer which links said at least two branches and wherein a heat spreading element of said cooling system is arranged in thermal contact between said laser active body and said reflective layer of said optical system.
2. Radiation field amplifying system according to embodiment 1, wherein a specific thermal resistance from said laser active body to said heat spreading element is smaller than a specific thermal resistance through said reflective layer.
3. Radiation field amplifying system according to one of the preceding embodiments, wherein said laser active body comprises one or several, in particular two, anti-reflection layer(s).
4. Radiation field amplifying system according to one of the preceding embodiments, wherein a specific thermal resistance through said one or at least one of, in particular each of, said several anti-reflection layers, in particular through an anti-reflection layer arranged in between said laser active body and said heat spreading element, is smaller than the specific thermal resistance through said reflective layer.
5. Radiation field amplifying system according to one of the preceding embodiments, wherein said heat spreading element is in thermal contact with said laser active body through a heat entry area.
6. Radiation field amplifying system according to one of the preceding embodiments, wherein a specific thermal resistance through said heat entry area is smaller than a specific thermal resistance through said reflective layer.
7. Radiation field amplifying system according to one of the preceding embodiments, wherein said heat entry area runs at least approximately perpendicular to a propagation direction of said radiation field along one of said at least two branches.
8. Radiation field amplifying system according to one of the preceding embodiments, wherein said heat entry area runs at least approximately perpendicular to an optical axis of said radiation field amplifying system.
9. Radiation field amplifying system according to one of the preceding embodiments, wherein said heat entry area extends within said one or in one of said several anti-reflection layers, which is in particular arranged between said laser active body and said heat spreading element.
10. Radiation field amplifying system according to one of the preceding embodiments, wherein a pumped part of said laser active body is pumped with energy for amplifying said radiation field, in particular a pumping radiation field penetrates said pumped part and in particular said at least two branches pass through said pumped part.
11. Radiation field amplifying system according to one of the preceding embodiments, wherein said heat entry area comprises a central heat entry area through which in particular most of the heat of a heat flow from said pumped part to said heat spreading element flows.
12. Radiation field amplifying system according to one of the preceding embodiments, wherein said central heat entry area is a projection of said pumped part onto said heat entry area, in particular a projection in direction of the propagation direction of said radiation field along one of said at least two branches or a projection in direction of a thermal heat flow from said pumped part towards said heat spreading element.
13. Radiation field amplifying system according to one of the preceding embodiments, wherein a thickness of said heat spreading element, which is measured along one of said at least two branches, is at least approximately the same as or larger than a thickness of said laser active body, which is measured along one of said at least two branches.
14. Radiation field amplifying system according to one of the preceding embodiments, wherein said thickness of said heat spreading element is larger than 100 µm and/or said thickness of said heat spreading element is smaller than 2 mm and/or said thickness of said heat spreading element is at least approximately 500 µm.
15. Radiation field amplifying system according to one of the preceding embodiments, wherein a radial extension of said heat spreading element is at least approximately the same as or is larger than a radial extension of said laser active body with said radial extensions being in particular measured with respect to an optical axis.
16. Radiation field amplifying system according to one of the preceding embodiments, wherein said heat spreading element comprises diamond, in particular monocrystalline diamond.
17. Radiation field amplifying system according to one of the preceding embodiments, wherein a heat flow within said laser active body runs essentially parallel to the direction of propagation of said radiation field along one of said at least two branches and/or runs essentially in axial direction with respect to said optical axis of said radiation field amplifying system.
18. Radiation field amplifying system according to one of the preceding embodiments, wherein a heat flow from said laser active body to said heat spreading element, in particular through said heat entry area, runs essentially parallel to the propagation direction of said radiation field along one of said at least two branches and/or runs essentially in axial direction with respect to said optical axis of said radiation field amplifying system.
19. Radiation field amplifying system according to one of the preceding embodiments, wherein a heat flow within said heat spreading element runs essentially transverse, in particular at least approximately perpendicular, to the propagation direction of said radiation field along one of said two branches and/or runs essentially in radial direction with respect to said optical axis of said radiation field amplifying system.
20. Radiation field amplifying system according to one of the preceding embodiments, wherein said heat spreading element is in thermal contact with one part or several additional parts of said cooling system and in particular heat, in particular heat coming from said pumped area, flows from said heat spreading element to said one or several additional parts of said cooling system through a heat escape area.
21. Radiation field amplifying system according to one of the preceding embodiments, wherein a specific thermal resistance through said heat entry area is smaller than a specific thermal resistance through said heat escape area.
22. Radiation field amplifying system according to one of the preceding embodiments, wherein said heat escape area is larger than said central heat entry area, in particular it is larger than said heat entry area.
23. Radiation field amplifying system according to one of the preceding embodiments, wherein said heat escape area is larger than a reflecting area of said reflective layer with said radiation field being reflected on said reflecting area.
24. Radiation field amplifying system according to one of the preceding embodiments, wherein said heat escape area runs essentially at least partly, in particular fully, adjacently to said reflective layer.
25. Radiation field amplifying system according to one of the preceding embodiments, wherein said heat escape area runs essentially at least partly, in particular fully, within said reflective layer.
26. Radiation field amplifying system according to one of the preceding embodiments, wherein said heat escape area runs essentially at least approximately perpendicular to said optical axis of said radiation field amplifying system.
27. Radiation field amplifying system according to one of the preceding embodiments, wherein said heat escape area and said heat entry area run essentially parallel to each other.
28. Radiation field amplifying system according to one of the preceding embodiments, wherein said heat entry area and said heat escape area lie essentially at opposing sides of said heat spreading element.
29. Radiation field amplifying system according to one of the preceding embodiments, wherein said reflection layer and/or one or several of said anti-reflection layers comprises several sublayers, in particular said sublayers possess alternately a high and a low refractive index.
30. Radiation field amplifying system according to one of the preceding embodiments, wherein said cooling system comprises a cooling circuit with a cooling medium, in particular a fluid cooling medium, for example water and said cooling circuit comprises a transfer channel at which heat is transferred towards the cooling medium flowing through said transfer channel.
31. Radiation field amplifying system according to one of the preceding embodiments, wherein said cooling circuit, in particular its transfer channel, is arranged on a side of said reflective layer which is opposite to the side at which said heat spreading element is arranged.
32. Radiation field amplifying system according to one of the preceding embodiments, wherein a transfer channel of said cooling circuit extends adjacently to said reflective layer.
33. Radiation field amplifying system according to one of the preceding embodiments, wherein said reflective layer forms partly a wall of said transfer channel.
34. Radiation field amplifying system according to one of the preceding embodiments, wherein said reflective layer is covered at a side facing towards said transfer channel with a protective coating.
35. Radiation field amplifying system according to one of the preceding embodiments, wherein said protective coating comprises silicon and/or silicon dioxide and/or metal.
36. Radiation field amplifying system according to one of the preceding embodiments, wherein said cooling system comprises a cooling element which is arranged adjacently to said reflective layer at a side opposite to said heat spreading element.
37. Radiation field amplifying system according to one of the preceding embodiments, wherein said cooling element comprising diamond and/or metal.
38. Radiation field amplifying system according to one of the preceding embodiments, wherein said cooling element forms partly a wall of said transfer channel.
39. Radiation field amplifying system according to one of the preceding embodiments, wherein said heat spreading element and said laser active body, in particular their anti-reflection layers, are bonded, in particular physically and/or chemically bonded.
40. Radiation field amplifying system according to one of the preceding embodiments, wherein said laser active body and said heat spreading element and in particular said cooling element are mechanically clamped together.
41. Radiation field amplifying system according to one of the preceding embodiments, wherein a holding element is arranged adjacently to said laser-active body at a side opposite to the side at which said heat spreading element is arranged.
42. Radiation field amplifying system according to one of the preceding embodiments, wherein said holding element is pressed against said laser-active body, in particular in direction towards said heat spreading element.
43. Radiation field amplifying system according to one of the preceding embodiments, wherein said holding element comprises glass, in particular fused silica and/or diamond, in particular monocrystalline diamond and/or saphir.
44. Radiation field amplifying system according to one of the preceding embodiments, wherein a surface of said holding element which is facing towards said laser-active body is essentially planar.
45. Radiation field amplifying system according to one of the preceding embodiments, wherein said surface of said holding element which is facing towards said laser active body is essentially convex.

Further features and explanations with respect to the present invention are disclosed in connection with a detailed specification and the drawings.

In the drawings:
- Fig. 1: shows a radiation field amplifying system according to a first embodiment;
- Fig. 2: shows an enlarged view of a part of fig. 1 in an area around a laser active body and a heat spreading element;
- Fig. 3: shows an even more enlarged view according to fig. 2 and
- Fig. 4: shows a representation of a second embodiment similar to fig. 2.

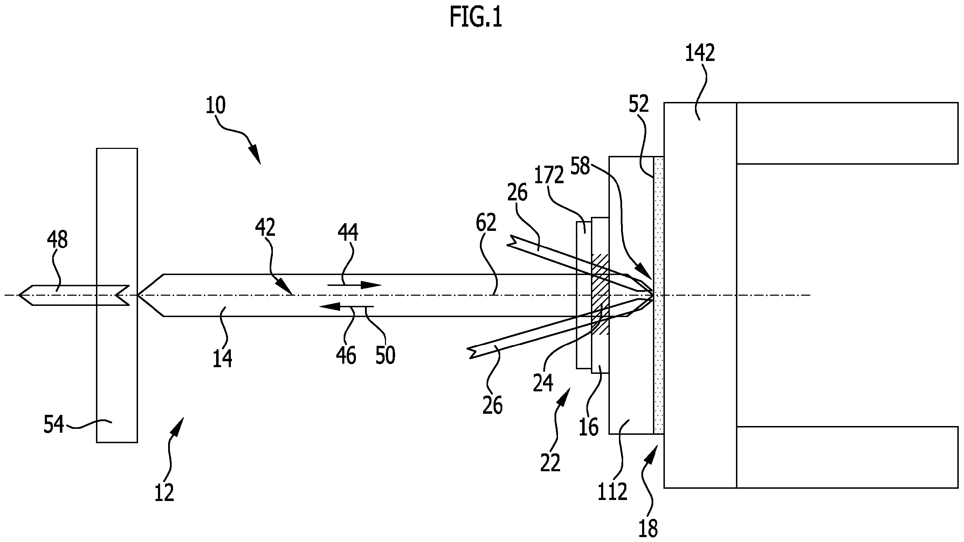

A first embodiment of a radiation field amplifying system, which is designated as a whole as 10 and is in particular a resonator, comprises an optical system 12 for guiding a radiation field 14, which should be amplified, a laser active body 16 and a cooling system 18 (fig. 1).

Furthermore, radiation field amplifying system 10 comprises a pumping system 22, which pumps energy into a pumped part 24 of laser active body 16 and accordingly pumping power is introduced into pumped part 24.

In particular, pumping system 22 comprises a source of a pumping radiation field 26 and pumping radiation field 26 penetrates pumped part 24.

Preferably, said pumping system 22 comprises an optical arrangement, for example of mirrors, for guiding said pumping radiation field 26 several times through said pumped part 24.

Optical system 12 guides radiation field 14 along an optical path 42 and comprises therefore several optical elements.

Optical path 42 comprises several branches 44, 46, 48.

Parts of radiation field 14 propagate along the branches 44, 46, 48 of optical path 42 and a direction of propagation 50 of radiation field 14 along the different branches 44, 46, 48 is different.

Optical system 12 comprises a reflective layer 52 and a semi-reflective element 54 and optical path 42 runs essentially between reflective layer 52 and semi-reflective element 54.

In particular a first branch 44 is incident on reflective layer 52 within a reflective area 58 and a second branch 46 runs away from reflective layer 52, in particular from reflective area 58.

Accordingly a part of radiation field 14 which propagates along first branch 44 is reflected by reflective layer 52 and the reflected part of radiation field 14 propagates along second branch 46.

A branch of optical path 42, for example second branch 46, is incident on semi-reflective element 54 and another branch, for example first branch 44, runs away from semi reflective element 54.

A part of radiation field 14 which propagates along the incident branch is partly reflected by semi-reflective element 54 and partly coupled out.

The out coupled part of radiation field 14 propagates along an outgoing branch 48 as an amplified radiation field with the amplified radiation field being amplified by radiation field amplifying system 10.

The part of radiation field 14 being reflected by semi-reflective element 54 propagates further along optical path 42 and reaches along first branch 44 reflective layer 52 again.

Accordingly, at least some branches, in particular first and second branches 44, 46, of optical path 42 are linked by the optical elements of optical system 12, in particular by reflective layer 52, and radiation field 14 propagates at least partly along a closed loop build by branches 44, 46 of optical path 42.

Accordingly, in the present embodiment radiation field 14 extends between reflective layer 52 and semi-reflective element 54.

Advantageously, reflective layer 52 is a part of the optical arrangement for pumping radiation field 26. Accordingly, several branches of pumping radiation field 26 are reflected by reflective layer 52.

In particular, the several branches of pumping radiation field 26 run oblique to an optical axis 62 of radiation field amplifying system 10.

Advantageously, first branch 44 is incident essentially perpendicular onto reflective area 58 and as a consequence second branch 46 extends essentially perpendicular outwards from reflective area 58.

Therefore in this embodiment the directions of propagation 50 along first branch 44 and second branch 46 are essentially parallel to each other but directed in opposite directions.

In particular first branch 44 and second branch 46 run essentially along an axial direction with respect to optical axis 62 of radiation field amplifying system 10.

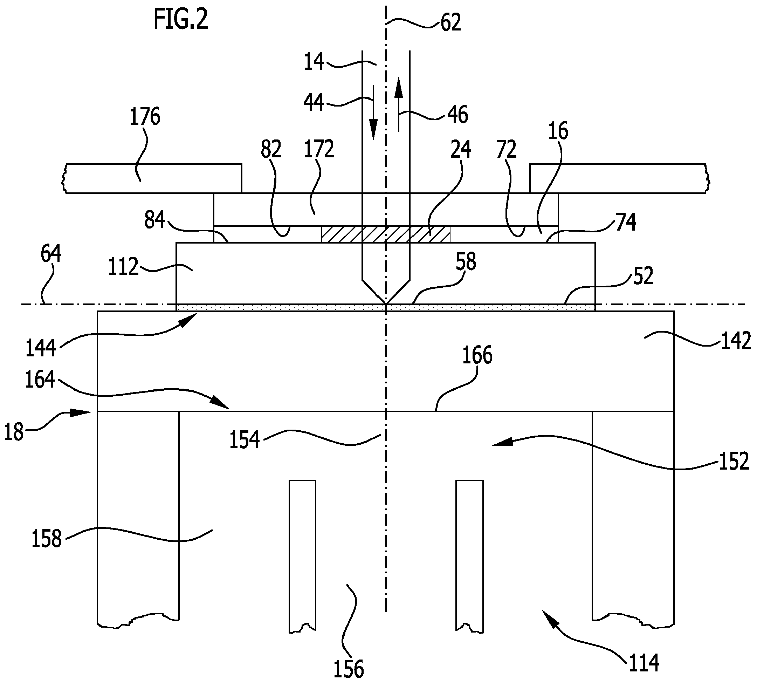

Reflective layer 52 extends essentially within a geometrical layer plane 64 (fig. 2).

In particular, an extension of reflective layer 52 within layer plane 64 is much larger, for example at least five times larger, than an extension of laser active body 16 perpendicular to layer plane 64.

Geometrical layer plane 64 runs preferably at least approximately perpendicular to optical axis 62.

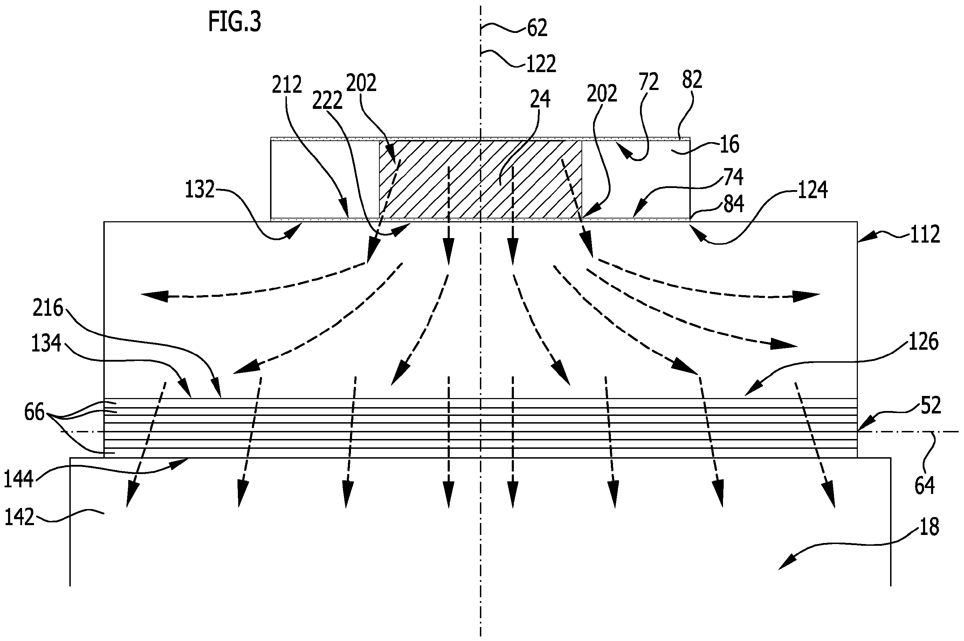

Advantageously, reflective layer 52 comprises several sublayers 66 (fig. 3).

Sublayers 66 are arranged consecutively with respect to incident radiation field 14, which propagates along optical path 42, in particular along first branch 44.

In particular the sublayers 66 extend essentially within sublayers planes, which run essentially parallel to layer plane 64.

The sublayers 66 possess alternately a high refractive index and a low refractive index.

Advantageously, reflective layer 52 reflects at least 98 %, preferably at least 99 %, of incident radiation field 14.

Laser active body 16 comprises a laser active material which exhibits a laser active transition.

In particular, within pumped part 24 the laser active transition is excited due to the introduced energy and a population inversion is induced.

At least two branches of optical path 42, in particular first and second branches 44, 46, pass through pumped part 24.

Accordingly, radiation field 14 propagates through pumped part 24 and is amplified thereby due to stimulated emission by the excited laser active transition.

First and second branches 44, 46 enter and exit laser active body on a first and second side 72 and 74, respectively, where first and second sides 72, 74 are in particular opposite to each other.

For example laser active body 16 is disc-like shaped. Preferably, a thickness, which is measured in axial direction to an axis of laser active body, is much smaller than an extension of laser active body 16 in a radial direction of that axis.

In particular, the thickness of laser active body corresponds to the distance between the surfaces of laser active body 16 at first side 72 and second side 74.

In particular, first and second sides 72, 74 extend at least approximately perpendicular to optical axis 62.

Preferably, laser active body 16 is covered at first side 72 and second side 74 with anti-reflective layers 82 and 84.

Due to the introduction of power into pumped part 24 this part heats up, for example to temperatures within the temperature range between 300 K and 500 K, and cooling system 18 is provided for cooling laser active body 16, in particular pumped part 24.

Cooling system 18 comprises a heat spreading element 112 and advantageously a cooling circuit 114.

Heat spreading element 112 is arranged in between laser active body 16 and reflective layer 52. Additionally, these elements 16, 52, 112 are in thermal contact.

Heat spreading element 112 is made of a material with good thermal conductivity and which is essentially transparent for radiation field 14 and for pumping radiation field 26.

Heat spreading element 112 extends in axial direction with respect to an axis 122 from a first side 124 to a second side 126 (fig. 3).

In particular axis 122 runs essentially parallel to optical axis 62, advantageously both axes 122, 62 coincide.

Preferably, heat spreading element 112 is disc-like shaped with an extension of heat spreading element 112 in radial direction with respect to axis 122 being larger, for example three times larger, than an extension of heat spreading element 112 in axial direction with respect to axis 122.

In particular, a thickness of heat spreading element 112, which corresponds to the distance between the surfaces of heat spreading element 112 at first and second sides 124 and 126 is larger than the thickness of laser active body 16.

Adjacently to first side 124 of heat spreading element 112 laser active body 16, in particular with its second side 74, is arranged.

Laser active body 16 touches, in particular with its anti-reflective layer 84, in a contact area 132 heat spreading element 112.

In a variant of the present embodiment heat spreading element 112 comprises at its first side 124 also an anti-reflective layer and the anti-reflective layers of laser active body 16 and heat spreading element 112 are touching each other within contact area 132.

In particular contact area 132 has a radial extension with respect to optical axis 62 which is at least approximately the same as the radial extension of laser active body 16.

Advantageously, contact area 132 extends essentially along the whole surface of the side 74 of laser active body 16 which is facing towards heat spreading element 112.

Laser active body 16 and heat spreading element 12 are designed at their contact such that a thermal resistance at the contact for a heat flow from laser active body 16, in particular from pumped part 24, towards heat spreading element 112 is minimized.

At second side 126 heat spreading element 112 is covered with reflective layer 52.

Accordingly, reflective layer 52 and heat spreading element 112 touch each other for example within a contact area 134.

Contact area 134 extends in radial direction with respect to optical axis 62 preferably essentially along the whole surface of the side 126 of heat spreading element 112 which is facing towards reflective layer 152.

Accordingly, heat spreading element 112 and reflective layer 52 are full-faced attached to each other.

In the present embodiment cooling system 18 comprises a cooling element 142 which is arranged adjacently to reflective layer 52 at a side opposite to the side of reflective layer 52 with which reflective layer 52 is arranged adjacently to heat spreading element 112.

Accordingly, reflective layer 52 is arranged in between heat spreading element 112 and cooling element 142.

With a heat receiving side 144 cooling element 142 is in full-faced contact with reflective layer 52.

For example, reflective layer 52 is glued with an adhesive material to heat receiving side 144.

Cooling element 142 is made of a material with high thermal conductivity in order to spread received heat.

In particular, in cooling element 142 received heat is transferred to cooling circuit 114.

Cooling circuit 114 comprises a channel system 152 in which a cooling medium circulates (fig. 2).

Channel system 152 comprises a transfer channel 154 which is provided for a heat transfer from other parts of cooling system 18, in particular from cooling element 142, to the cooling medium.

Transfer channel 154 is connected with a supply channel 156 and an outlet channel 158 of channel system 152.

From supply channel 156 cooling medium is provided to transfer channel 154 where the cooling medium absorbs heat and the heated cooling medium leaves transfer channel 154 through outlet channel 158 to be cooled again.

Transfer channel 154 extends along a heat emitting side 164 of cooling element 142, which is for example arranged opposite to heat receiving side 144.

In particular said transfer channel is surrounded by a wall 166 and heat emitting side 164 preferably partly forms wall 166.

In the present embodiment supply channel 156 is directed essentially straight towards heat emitting side 164.

Accordingly, cooling medium, which comes out of supply channel 156, flows against heat emitting side 164 and is deflected by heat emitting side 164 such that a good heat transfer from cooling element 142 to the cooling medium is achieved.

In particular supply channel 156 is aligned essentially coaxial to optical axis 62.

In particular, a fictitious elongation of supply channel 156 passes through pumped area 24 such that the cooling medium is supplied at a region of heat emitting side 164 to which most of the heat steaming from pumped part 24 flows.

Laser active body 16, heat spreading element 112, reflective layer 52 and cooling element 142 are fixed together.

For example laser active body 16 and heat spreading element 112 are bonded, in particular physically or chemically bonded.

In the present embodiment laser active body 16, heat spreading element 112 reflecting layer 52 and cooling element 142 are mechanically held together, in particular clamped together.

A holding element 172 is arranged adjacently to first side 72 of laser active body 16.

In particular, holding element 172 lies full-faced against laser active body 16 with anti-reflection layer 82 advantageously extending in between holding element 172 and laser active body 16.

In particular optical path 42 passes through holding element 172. Therefore holding element 172 is preferably made of a material essentially transparent for a radiation field 14.

Preferably holding element 172 extends areally along first side 72.

In particular holding element 172 covers pumped part 24 entirely.

Advantageously, holding element 172 is made of a material with high thermal conductivity, such that an additional cooling effect for laser active body 16 is provided.

Furthermore a fixing device 176 is provided which acts on holding element 172 outside an area through which optical path 42 passes such that radiation field 14 is not affected by fixing device 176. Additionally, holding element 172 is arranged such that pumping radiation field 26 is not affected by fixing device 176.

For example, fixing device 176 presses holding element 172 onto laser body 16 and accordingly fixing device 176 fixes laser body 16, heat spreading element 112, reflective layer 52 and cooling element 142 together.

In summary, radiation field amplifying system 10 operates as follows:
Radiation field 14 propagates along first branch 44 of optical path 42 through pumped part 24, crosses contact area 132 and passes through heat spreading element 112 and incidents on reflective layer 52.

For example radiation field 14 passes holding element 172 before entering pumped part 24.

Radiation field 14 is reflected by reflective layer 52 and propagates along second branch 46 through heat spreading element 112, crosses contact area 132 and passes through pumped part 24 and for example holding element 172.

In particular, radiation field 14 propagates along first branch 44 and second branch 46 essentially along the same way but in opposite directions.

By passing through pumped area 24 radiation field 14 is amplified.

Due to the introduced power by pumping system 22, pumped part 24 heats up.

To prevent overheating of laser active body 16, in particular pumped part 24, and for an efficient operation of radiation field amplifying system 10 laser active body 16 is cooled by cooling system 18.

A heat flow 202, shown exemplarily as thick dashed arrows in fig. 3, flows from pumped part 24 through an heat entry area 212 into heat spreading element 112.

Heat flow 202 passes through heat spreading element 112 and escapes out from heat spreading element 112 through an heat escape area 216.

Finally, the heat of heat flow 202 is absorbed further downstream by cooling system 18.

Heat flow 202 propagates essentially directly from pumped part 24 towards heat spreading element 112.

In particular, heat flow 202 propagates in laser active body 16 essentially in axial direction with respect to optical axis 62 which for example corresponds essentially to direction 50 of propagation of radiation field 14 along first branch 44.

Heat entry area 212 corresponds for example essentially to contact area 132 between laser active body 16 and heat spreading element 112.

Thereby most of the heat flow 202 flows through a central heat entry area 222 which corresponds essentially to a projection of pumped part 24 in axial direction with respect to optical axis 62 onto heat entry area 212.

For example central heat entry area 222 is the area at which pumped part 24 is in contact with heat spreading element 112.

In particular heat entry area 212 and central heat entry area 222 extend within anti-reflection layer 84.

In heat spreading element 112 the heat of heat flow 202 spreads essentially in radial direction with respect to optical axis 62.

Thereby advantageously an efficient absorption of heat away from pumped part 24 into heat spreading element 112 is provided.

The spreading of the heat is preferably increased within heat spreading element 112 because heat spreading element 112 is made of a material of high thermal conductivity, which is in particular larger than the thermal conductivity of laser active body 16.

In the present embodiment heat escape area 216 essentially corresponds to contact area 134 between heat spreading element 112 and reflective layer 52.

The extension of heat spreading element 112 in radial direction with respect to optical axis 62 is much larger than an extension of pumped part 24 in radial direction with respect to optical axis 62 and therefore heat escape area 216 is larger than heat entry area 212 and in particular much larger than central heat entry area 222.

Therefore a larger area is provided for heat flow 202 to escape from heat spreading element 212 and to pass through reflective layer 52 with the thermal resistance through reflective layer 52 being typically larger than the thermal resistance through contact area 132, in particular through anti-reflective layer 84, and within heat spreading element 112.

Heat flow 202 propagates further through cooling element 142 to heat emitting side 164, where the heat is absorbed by the cooling medium of cooling circuit 114.

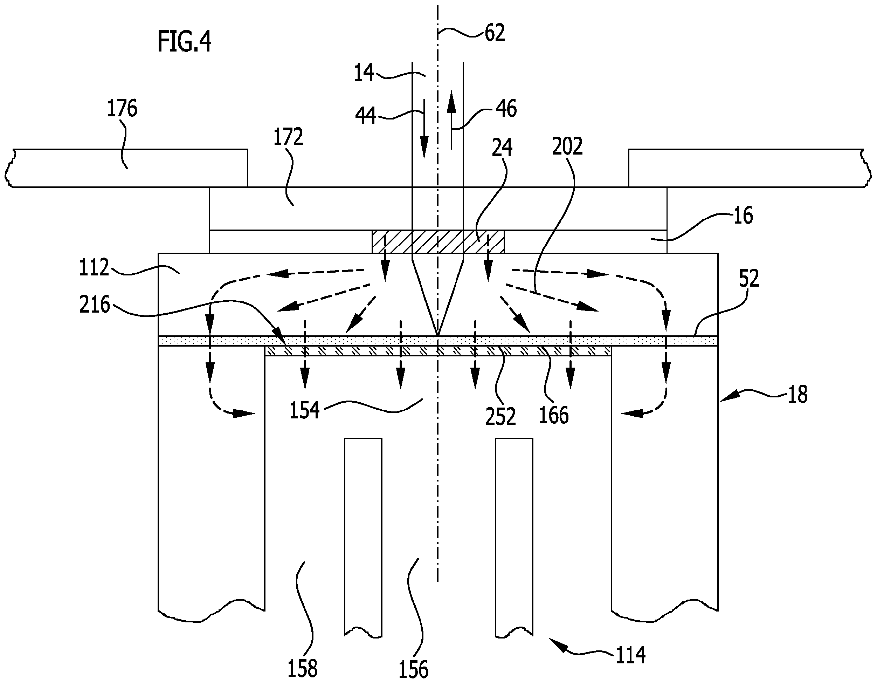

In a second embodiment, which is exemplarily shown in fig. 4, those elements which are identical to elements of the first embodiment are designated with the same reference sign and with respect to the description of these elements it is completely referred to the explanations given in connection with the first embodiment.

In the second embodiment transfer channel 154 runs adjacently to reflective layer 52.

In particular, there is no cooling element 142 between transfer channel 154 and reflective layer 52.

Reflective layer 52 partly forms wall 166 of transfer channel 154.

In particular heat escape area 216 corresponds in particular essentially to a contact area of heat transfer channel 154 with reflective layer 52.

Advantageously, reflective layer 52 is provided with a protective coating 252 which is arranged on a side of reflective layer 52 facing towards transfer channel 154.

Protective coating 252 is arranged between reflective layer 52 and an interior of transfer channel 154, such that the cooling medium of cooling circuit 114 is not in direct contact with reflective layer 52.

Therefore protective coating 252 protects reflective layer 52 from impacts of the cooling medium which could cause damages to a reflective layer 52.

Advantageously, supply channel 156 is directed towards reflective layer 52, such that the cooling medium flows against reflective layer 52 to increase the efficiency of the heat transfer. Preferably, protective layer 252 prevents a direct contact of the flow of the cooling medium against reflective layer 52 and thus protects reflective layer 52 from the striking flow of the cooling medium.

In particular, also in the second embodiment the heat flow 202 propagates essentially in axial direction with respect to optical axis 62 from pumped part 24 into heat spreading element 112 and spreads in radial direction with respect to optical axis 62 within heat spreading element 112.

At least most of the heat escapes from heat spreading element 112 through heat escape area 216 and flows for example to transfer channel 154 and being absorbed thereby the cooling medium.

The other elements of radiation field amplifying system 10 according to the second embodiment, which are not explained explicitly, are identical to corresponding elements of the first embodiment, so that with respect to these elements it is fully referred to the explanations given in connection with the first embodiment.

## Claims

1. Radiation field amplifying system (10) for amplifying a radiation field (14) comprising a laser active body (16), a cooling system (18) for cooling said laser active body (16) and an optical system (12) which guides said radiation field (14) along an optical path (42) wherein said optical path (42) comprises several branches (44, 46, 48), wherein at least two branches (44, 46) of said optical path (42) pass through said laser active body (16), wherein said optical system (12) comprises at least one reflective layer (52) which links said at least two branches (44, 46) and wherein a heat spreading element (112) of said cooling system (18) is arranged in thermal contact between said laser active body (16) and said reflective layer (52).

2. Radiation field amplifying system (10) according to claim 1, **characterized in that** a specific thermal resistance from said laser active body (16) to said heat spreading element (112) is smaller than a specific thermal resistance through said reflective layer (52).

3. Radiation field amplifying system (10) according to one of the preceding claims, **characterized in that** said laser active body (16) comprises one or several, in particular two, anti-reflection layer(s) (82, 84).

4. Radiation field amplifying system (10) according to one of the preceding claims, **characterized in that** said heat spreading element (112) is in thermal contact with said laser active body (16) through a heat entry area (212), wherein in particular said heat entry area (212) runs at least approximately perpendicular to a propagation direction of said radiation field (14) along one of said at least two branches (44, 46), wherein in particular said heat entry area (212) extends within said one anti-reflection layer (82, 84) or in one of said several anti-reflection layers (82, 84), which is in particular arranged between said laser active body (16) and said heat spreading element (112).

5. Radiation field amplifying system (10) according to one of the preceding claims, **characterized in that** a pumped part (24) of said laser active body (16) is pumped with energy for amplifying said radiation field (14), wherein in particular a pumping radiation field (26) penetrates said pumped part (24).

6. Radiation field amplifying system (10) according to one of the preceding claims, **characterized in that** said heat entry area (212) comprises a central heat entry area (222), wherein in particular through said central heat entry area (222) most of the heat of a heat flow (202) from said pumped part (24) to said heat spreading element (112) flows, wherein in particular said central heat entry area (222) is a projection of said pumped part (24) onto said heat entry area (212).

7. Radiation field amplifying system (10) according to one of the preceding claims, **characterized in that** a thickness of said heat spreading element (112), which is measured along one of said at least two branches (44, 46), is at least approximately the same as or larger than a thickness of said laser active body (16), which is measured along one of said at least two branches (44, 46).

8. Radiation field amplifying system (10) according to one of the preceding claims, **characterized in that** a radial extension of said heat spreading element (112) is at least approximately the same as or is larger than a radial extension of said laser active body (16) with said radial extensions being in particular measured with respect to an optical axis (62) of said radiation field amplifying system (10)

9. Radiation field amplifying system (10) according to one of the preceding claims, **characterized in that** a heat flow (202) from said laser active body (16) to said heat spreading element (112), in particular through said heat entry area (212), runs essentially parallel to the propagation direction of said radiation field (14) along one of said at least two branches (44, 46).

10. Radiation field amplifying system (10) according to one of the preceding claims, **characterized in that** a heat flow (202) within said heat spreading element (112) runs essentially transverse, in particular at least approximately perpendicular, to the propagation direction of said radiation field (14) along one of said at least two branches (44, 46).

11. Radiation field amplifying system (10) according to one of the preceding claims, **characterized in that** said heat spreading element (12) is in thermal contact with one or several additional parts of said cooling system (18) and wherein heat flows from said heat spreading element (112) to said one or several additional parts of said cooling system (18) through a heat escape area (216), wherein in particular said heat escape area (216) is larger than said central heat entry area (222), in particular larger than said heat entry area (212), wherein in particular a specific thermal resistance through said heat entry area (212) is smaller than a specific thermal resistance through said heat escape area (216), wherein in particular said heat escape area (216) is larger than a reflecting area (58) of said reflective layer (52) with said radiation field (14) being reflected on said reflecting area (58), wherein in particular said heat escape area (216) runs essentially at least partly adjacently to and/or within said reflective layer (52), wherein in particular said heat escape area (216) and said heat entry area (212) run essentially parallel to each other, wherein in particular said heat entry area (212) and said heat escape area (216) lie essentially at opposing sides of said heat spreading element (112).

12. Radiation field amplifying system (10) according to one of the preceding claims, **characterized in that** said reflective layer (52) and/or one or several of said anti-reflection layers (82, 84) comprises several sublayers, wherein in particular said sublayers possess alternately a high and a low refractive index.

13. Radiation field amplifying system (10) according to one of the preceding claims, **characterized in that** said cooling system (18) comprises a cooling circuit (114) with a cooling medium, wherein in particular said cooling circuit (114) comprises a transfer channel (154) at which heat is transferred towards the cooling medium flowing through said transfer channel (154).

14. Radiation field amplifying system (10) according to one of the preceding claims, **characterized in that** said cooling circuit (114), in particular its transfer channel (154), is arranged on a side of said reflective layer (52) which is opposite to the side at which said heat spreading element (112) is arranged.

15. Radiation field amplifying system (10) according to one of the preceding claims, **characterized in that** said laser active body (16) and said heat spreading element (112) and in particular said cooling element (142) are mechanically clamped together.
